Europäisches Patentamt

European Patent Office

Office européen des brevets

(19)

(11) Veröffentlichungsnummer : **0 367 934 B1**

(12) **EUROPÄISCHE PATENTSCHRIFT**

(45) Veröffentlichungstag der Patentschrift :
22.01.92 Patentblatt 92/04

(51) Int. Cl.$^5$ : **A01N 59/00**

(21) Anmeldenummer : **89116281.0**

(22) Anmeldetag : **04.09.89**

(54) **Insektizide.**

(30) Priorität : **19.10.88 DE 3835592**

(43) Veröffentlichungstag der Anmeldung :
**16.05.90 Patentblatt 90/20**

(45) Bekanntmachung des Hinweises auf die
Patenterteilung :
**22.01.92 Patentblatt 92/04**

(84) Benannte Vertragsstaaten :
**AT BE CH DE ES FR GB GR IT LI LU NL SE**

(56) Entgegenhaltungen :
**BE-A- 674 442**

(56) Entgegenhaltungen :
**US-A- 2 818 340**
**US-A- 3 159 536**
**JOURNAL OF ECONOMIC ENTOMOLOGY,**
**Band 52, Nr. 2, April 1959, Seiten 190-207,**
**Entomological Society of America, College**
**Park, Maryland, US; W. EBELING et al.:**
**"Rapid Desiccation of Drywood Termites with**
**Inert Sorptive Dusts and Other Substances"**

(73) Patentinhaber : **Degussa Aktiengesellschaft**
**Weissfrauenstrasse 9**
**W-6000 Frankfurt am Main 1 (DE)**

(72) Erfinder : **Vrba, Cenek H., Prof. Dr.**
**213 Cardift Dr. N.W.**
**Calgary Alta, T2 K 151 (CA)**

## Beschreibung

Die Erfindung betrifft ein Verfahren zur Bekämpfung von Insekten.

Es ist bekannt, schädliche Insekten auf Pflanzen mittels organischer Substanzen, die versprüht werden, zu bekämpfen. Diese Substanzen haben den Nachteil, daß sie in der Regel eine hohe Toxizität auch für andere Lebenswesen aufweisen.

Es bestand somit die Aufgabe, ein Insektizid zu finden, welches nicht toxisch ist.

Es ist bekannt, Insekten mit pulverförmiger pyrogen hergestellter und hydrophobierter Kieselsäure zu behandeln (US-PS 3,159,536).

Aus der US-PS 2,818,340 ist es bekannt, Tierfutter gegen Insektenangriffe zu schützen, indem man das Tierfutter mit einem pulverförmigem, hydrophobem siliciumhaltigem Stoff beschichtet- Der hydrophobe Stoff kann (gemäß Spalte 3, Zeile 25 und Spalte 4, Absatz 1) aus $SiCl_4$ in Gegenwart von Wasserstoff durch Hochtemperaturhydrolyse hergestellt und mit einem Gemisch aus Dimethyldichlorsilan und Trimethylchlorsilan hydrophobiert werden.

Aus dem Dokument Journal of Economic Entomology Band. 52, No. 2 (1958). Seiten 190 bis 207 ist es bekannt, Insekten mit inerten Stäuben zu behandeln. Als inerter Staub kann zum Beispiel Kieselgel, daß mit Magnesiumsilicofluorid oder Ammoniumsilicofluorid beschichtet worden ist, eingesetzt werden.

Gegenstand der Erfindung ist ein Verfahren zur Bekämpfung von Insekten, welches dadurch gekennzeichnet ist, daß man die Insekten mit einer wäßrigen Dispersion der pyrogen hergestellten und hydrophobierten Kieselsäure besprüht.

Die wäßrige Dispersion kann einen Gehalt an pyrogen hergestellter und hydrophobierter Kieselsäure von 0,2 bis 20 Gew.-%, vorzugsweise 3 bis 16 Gew.-% aufweisen.

Als pyrogen hergestellte und hydrophobierte Kieselsäure können die folgenden, durch physikalisch-chemische Parameter gekennzeichnete Kieselsäure eingesetzt werden :

EP 0 367 934 B1

| Prüfmethode | DIM | AEROSIL R 202 | AEROSIL R 805 | AEROSIL R 812 | AEROSIL R 972 | AEROSIL R 974 |
|---|---|---|---|---|---|---|
| Verhalten gegenüber Wasser | | | | hydrophob | | |
| Aussehen | | | | | | |
| Oberfläche nach BET [1] | $m^2/g$ | 90+20 | 150+25 | 260+30 | 110+20 | 170+20 |
| Mittlere Größe der Primärteilchen | Nanometer | 14 | 12 | 7 | 16 | 12 |
| Stampfdichte [2] normale Ware | g/l | ca. 50 | ca. 50 | ca. 50 | ca. 50 | ca. 50 |
| verdichtete Ware (Zusatz "V") | g/l | ca. 90 | ca. 90 | ca. 90 | ca. 90 | ca. 90 |
| Trocknungsverlust [3] (2h bei 105 °C) bei Verlassen des Lieferwerkes | % | $\leq 0,5$ | $\leq 0,5$ | $\leq 0,5$ | $\leq 0,5$ | $\leq 0,5$ |
| Glühverlust [4] [7] (2h bei 1000 °C) | % | 4,5-7,5[13] | 6-9[14] | 1,0-2,5[15] | <2[12] | <2[12] |
| pH-Wert [5] (in 4%iger wäßriger Dispersion) | | 4-6[10] | 3,5-5,5[10] | 5,5-7,5[10] | 3,6-4,3[10] | 3,4-4,2[10] |
| $SiO_2$ [8] | % | >99,8 | >99,8 | >99,8 | >99,8 | >99,8 |
| $Al_2O_3$ [8] | % | <0,05 | <0,05 | <0,05 | <0,05 | <0,05 |
| $Fe_2O_3$ [8] | % | <0,01 | <0,01 | <0,01 | <0,01 | <0,01 |
| $TiO_2$ [8] | % | <0,03 | <0,03 | <0,03 | <0,03 | <0,03 |
| HCl [8] [11] | % | <0,025 | <0,025 | <0,025 | <0,05 | <0,1 |
| Siebrückstand[6] (nach Mocker, 45 µm) | % | – | – | – | – | – |

1) nach DIN 66 131

2) nach DIN ISO 787/XI, JIS K 5101/18

3) nach DIN ISO 787/II, ASTM D 280, JIS K 5101/21

4) nach DIN 55 921, ASTM D 1208, JIS K 5101/23

5) nach DIN ISO 787/IX, ASTM D 1208, JIS K 5101/24

6) nach DIN ISO 787/XVII, JIS K 5101/20

7) bezogen auf die 2 Stunden bei 105°C getrocknete Substanz

8) bezogen auf die 2 Stunden bei 1000°C gegelühte Substanz

9) spezialle vor Feuchtigkeit schützende Verpackung

10) in Wasser : Aceton oder Methanol = 1 : 1

11) HCl-Gehalt ist Bestandteil des Glühverlustes

12) enthält ca. 1% chemisch gebundenen Kohlenstoff

13) enthält ca. 5% chemisch gebundenen Kohlenstoff

14) enthält ca. 7% chemisch gebundenen Kohlenstoff

15) enthält ca. 3,5% chemisch gebundenen Kohlenstoff

Diese Kieselsäuren können nach bekannten Verfahren, wie z.B. gemäß DE-PS 1163784 hergestellt werden.

Das erfindungsgemäße Verfahren weist die folgenden Vorteile auf :

Die eingesetzten Dispersionen von pyrogen hergestellter und hydrophobierter Kieselsäure bzw. diese Kieselsäuren selbst sind untoxisch und ungefährlich für die Umwelt mit Ausnahme der Insekten. Sie hinterlassen keine unerwünschten Rückstände auf Pflanzen, in Nahrungsmitteln etc. Es gibt keine Lagerprobleme und keine Probleme mit z.B. der Überdosierung. Die pulverförmige Schicht auf den Blättern bzw. Pflanzen kann durch Waschen mit Wasser leicht entfernt werden.

Ein weiterer Vorteil ist die vernichtende Wirkung auf Gr−und Gr+Bakterien.

Das erfindungsgemäße Verfahren kann vorteilhaft angewandt werden im Gartenbau, in der Landwirtschaft, in der Medizin und in der Veterinärmedizin.

Die pestizide Wirkung der erfindungsgemäß eingesetzten Kieselsäuredispersionen oder von "trocknem Wasser" beruht auf dem direkten Kontakt dieser Substanzen mit den Insekten.

Dieser Kontakt sollte längere Zeit, bevorzugt mehrere Stunden, bestehen. Die Dispersionen bzw. diese Kieselsäuren selbst werden in ausreichendem Maße auf den Pflanzen appliziert, bis eine sichtbare dünne Schicht zu sehen ist.

Wo aufgrund der ungünstigen Windverhältnisse eine Aufbringung der Kieselsäure auf die Blätter ungünstig ist, kann die Dispersion auch in den Boden, vorteilhafterweise in einer Tiefe von 2 bis 4 cm, eingegraben werden.

Diese Anwendungsmethode hat den Vorteil, daß durch die Kieselsäure die Wasseraufnahmekapazität des Bodens verbessert werden kann.

In einer besonderen Ausführungsform kann ein Stück Gewebe, z.B. Leinwand, mit der Kieselsäuredispersion getränkt und diese zwischen Pflanzenreihen aufgestellt werden.

In einer anderen Ausführungsform kann das mit der Kieselsäuredispersion getränkte Gewebe in Streifen geschnitten und direkt an den Pflanzen, z.B. Baumkronen, angebracht werden.

Beispiele

Zur Bevorratung wurde mit Aerosil R 972 und das sogenannte "Trockene Wasser" mit einem Aerosilgehalt von 20 Gew.-% hergestellt.

Niedrige Konzentrationen, z.B. 15 Gew.-% Aerosil R 972, suspendiert in Wasser führen zu einer Paste. Diese Paste bildet nach dem Trocknen eine dicke, gebrochene Schicht und darunter einen dünnen Film an pulverförmigem Material.

Die 15 %ige Paste kann mit Wasser auf eine Konzentration von 4 Gew.-% verdünnt werden. Diese Suspension wird auf den Boden einer Petrischale mit einer bekannten Sprühvorrichtung aufgesprüht, im Laufe von 24 Stunden getrocknet und auf die Insekticidwirkung geprüft.

Mit Aerosil R 974 wurde auf die gleiche Weise erst eine 15 %ige und daraus eine 4 %ige Suspension hergestellt.

Die Ergebnisse der Untersuchung der insektiziden Wirkung sind in der Tabelle 1 dargstellt.

Tabelle 1

Kontinuierliche Exposition von <u>Tribolium confusum</u> Duv. an Aerosil R 972 und R 974

| Beispiel | geprüftes Material | Dosierung mg | Zahl der Insekten | Cumulative Sterblichkeit in Tagen in % | | | | | | |
|---|---|---|---|---|---|---|---|---|---|---|
| | | | | 1 | 2 | 3 | 4 | 5 | 6 | 7 |
| 1 | Aerosil R 972 | 100 | 10 | 50 | 80 | 100 | | | | |
| 2 | Aerosil R 972 | 100 | 30 | 0 | 53 | 100 | | | | |
| 3 | " " 4% susp. dehydrated | 15 | 30 | 0 | 70 | 97 | 97 | 97 | 97 | 100 |
| 4 | wie Nr. 3 | 15 | 30 | 0 | 70 | 97 | 97 | 100 | | |
| 5 | wie Nr. 3 | 15 | 30 | 0 | 57 | 93 | 93 | 97 | 100 | |
| 6 | unbehandelte Kontrolle | – | 30 | 0 | 0 | 0 | 0 | 0 | 0 | |
| 7 | Aerosil R 972 15% susp. dehydrated | 300 | 30 | 0 | 97 | 100 | | | | |
| 8 | wie Nr. 7 | 100 | 30 | 0 | 90 | 97 | 100 | | | |
| 9 | Aerosil R 974 | 100 | 10 | 100 | | | | | | |
| 10 | Aerosil R 974 | 100 | 30 | 80 | 100 | | | | | |
| 11 | " " 4% susp. dehydrated | 15 | 30 | 80 | 100 | | | | | |
| 12 | wie Nr. 11 | 15 | 30 | 80 | 100 | | | | | |
| 13 | wie Nr. 11 | 15 | 30 | 70 | 100 | | | | | |
| 14 | unbehandelte Kontrolle | – | 30 | 0 | 0 | 0 | 0 | 0 | 0 | |

**Patentansprüche**

1. Verfahren zur Bekämpfung von Insekten, **dadurch gekennzeichnet,** daß man die Insekten mit einer wäßrigen Dispersion der pyrogen hergestellten und hydrophobierten Kieselsäure besprüht.

**Claims**

1. A process for controlling insects, characterized in that the insects are sprayed with an aqueous dispersion of pyrogenic, hydrophobicized silica.

**Revendications**

1. Procédé pour combattre les insectes, caractérisé en ce que l'on pulvérise les insectes avec une dispersion aqueuse d'acide silicique obtenu pyrogénique et rendu hydrophobe.